# EUROPEAN PATENT APPLICATION

(11) **EP 4 746 119 A1**
(43) Date of publication of application: **20.05.2026**
(21) Application number: 25214561.0
(22) Date of filing: 10.11.2025
(51) Int. Cl.: H01M 10/52, H01M 50/489, H01M 50/491, H01M 50/103

(54) **RECHARGEABLE BATTERY**

(30) Priority: 13.11.2024 KR 20240161405
(71) Applicant: SAMSUNG SDI CO., LTD., Yongin-si, Gyeonggi-do 17084 (KR)
(72) Inventor: Lee, Sumin, 17084 Yongin-si, Gyeonggi-do (KR)
(74) Representative: Meissner Bolte Partnerschaft mbB

(57) **Abstract**

A rechargeable battery (1, 2, 3, 4, 5, 6) includes an electrode assembly (10) that includes a first electrode (11) and a second electrode (12) stacked on opposite sides of a separator (13), and a first lead tab (141) and a second lead tab (142) respectively connected to uncoated regions (11b, 12b) of the first electrode (11) and the second electrode (12), a case (20) accommodating the electrode assembly (10), a first side retainer (71) and a second side retainer (72) between the first lead tab (11b) and an inner wall of the case (20) and between the second lead tab (12b) and the inner wall of the case (20), respectively, a cap plate (30) covering an opening of the case (20) and including electrode terminals (21, 22), the electrode terminals (21, 22) being electrically connected to the first lead tab (141) and the second lead tab (142) of the electrode assembly (10), and a gas-capturing thin film layer (40, 240, 340, 440, 540, 640) on at least one of the electrode assembly (10), the case (20), the cap plate (30), the first side retainer (71), and the second side retainer (72).

## Description

### BACKGROUND

### 1. Field

The present disclosure relates to a rechargeable battery that generates fine gas inside a case during formation or while being left unattended.

### 2. Description of the Related Art

A rechargeable battery is a battery that performs repeated charging and discharging, unlike a primary battery. A small-capacity rechargeable battery may be used in a portable small electronic device such as a mobile phone, a laptop computer, and a camcorder. A large-capacity and high-density rechargeable battery may be used for a power source or energy storage for driving a motor of a hybrid vehicle or an electric vehicle.

The rechargeable battery may include an electrode assembly for charging and discharging current, a case or pouch accommodating the electrode assembly and an electrolyte, and an electrode terminal connected to the electrode assembly and drawn out of the case or pouch. The electrode assembly may be formed as a jelly roll type formed by winding an electrode and a separator, or as a stack type formed by stacking an electrode and a separator.

### SUMMARY

The present disclosure provides a rechargeable battery including an electrode assembly that includes a first electrode and a second electrode stacked on both sides of a separator, and a first lead tab and a second lead tab respectively connected to uncoated regions of the first electrode and the second electrode; a case accommodating the electrode assembly; a first side retainer and a second side retainer interposed between the first lead tab and an inner wall of the case and between the second lead tab and the inner wall of the case; a cap plate that is provided with electrode terminals electrically connected to the first lead tab and the second lead tab of the electrode assembly to cover an opening of the case; and a gas-capturing thin film layer provided on at least one of the electrode assembly, the case, the cap plate, the first side retainer, and the second side retainer.

The gas-capturing thin film layer may be provided on outer surfaces of the first side retainer and the second side retainer.

The gas-capturing thin film layer may be provided on inner surfaces of the first side retainer and the second side retainer.

The electrode assembly may further include a finishing tape attached to outer surfaces of the first lead tab and the second lead tab and a side surface of the electrode assembly.

The gas-capturing thin film layer may be formed of a gas adsorbent nanocomposite.

The gas-capturing thin film layer may include fine holes that adsorb fine gases generated within the electrode assembly while cell is being formed and left unattended.

The cap plate may further include an insulating case on an inner surface facing the electrode assembly.

The gas-capturing thin film layer may be provided on an outer surface of the insulating case.

The gas-capturing thin film layer may be provided on an interior surface of the insulating case.

The gas-capturing thin film layer may maintain a set distance (D) from the electrode assembly.

The case may include a small width side surface corresponding to a narrow width surface of the electrode assembly and a large width side surface corresponding to a wide width surface of the electrode assembly, and the gas-capturing thin film layer may be provided on an inner surface of the small width side surface.

The case may include a small width side surface corresponding to a narrow width surface of the electrode assembly and a large width side surface corresponding to a wide width surface of the electrode assembly, and the gas-capturing thin film layer may be provided on an inner surface of the large width side surface.

The gas-capturing thin film layer may be provided on an inner surface of a side surface of the case.

The case may include a small width side surface corresponding to a narrow width surface of the electrode assembly and a large width side surface corresponding to a wide width surface of the electrode assembly, and the gas-capturing thin film layer may be provided on the small width side surface and the large width side surface.

The gas-capturing thin film layer may be continuously provided on the small width side surface and the large width side surface.

The gas-capturing thin film layer may be provided on an outer surface of the electrode assembly.

The electrode assembly may include a narrow width surface and a wide width surface, and the gas-capturing thin film layer may be provided on the narrow width surface and the wide width surface.

The gas-capturing thin film layer may be continuously provided on the narrow width surface and the wide width surface.

The gas-capturing thin film layer may be formed by a coating of a gas adsorbent nanocomposite.

The gas-capturing thin film layer may be formed as a film of a gas adsorbent nanocomposite.

### BRIEF DESCRIPTION OF THE DRAWINGS

Features will become apparent to those of skill in the art by describing in detail exemplary embodiments with reference to the attached drawings, in which:
FIG. 1 illustrates an exploded perspective view of a rechargeable battery according to an embodiment of the present disclosure.
FIG. 2 illustrates a longitudinal cross-sectional view of FIG. 1 assembled.
FIG. 3 illustrates a perspective view of a side retainer of FIG. 2 and a gas-capturing thin film layer formed thereon.
FIG. 4 illustrates a cross-sectional view taken along line IV-IV' of FIG. 3.
FIG. 5 illustrates a longitudinal cross-sectional view of a rechargeable battery according to another embodiment of the present disclosure.
FIG. 6 illustrates a longitudinal cross-sectional view of a rechargeable battery according to yet another embodiment of the present disclosure.
FIG. 7 illustrates a cross-sectional perspective view of a case applied to a rechargeable battery according to still another embodiment of the present disclosure.
FIG. 8 illustrates a traverse cross-sectional view of a rechargeable battery according to a yet another embodiment of the present disclosure.
FIG. 9 illustrates a traverse cross-sectional view of a rechargeable battery according to still another embodiment of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

Terms including an ordinal number, such as first, second, etc., may be used to describe various elements, but the elements are not limited by the terms. These terms are only used to differentiate one constituent element from another.

It should be understood that, when it is described that an element is "coupled" or "connected" to another element, the element may be "directly coupled" or "directly connected" to the another element, or may be "coupled" or "connected" to the other element through a third element. In contrast, it should be understood that, when it is described that an element is "directly coupled" or "directly connected" to another element, no element is present between the element and the other element.

Throughout the specification, it should be understood that the term "include", "comprise", "have", or "configure" indicates that a feature, a number, a step, an operation, a constituent element, a part, or a combination thereof described in the specification is present, but does not exclude a possibility of presence or addition of one or more other features, numbers, steps, operations, constituent elements, parts, or combinations, in advance. Unless explicitly described to the contrary, the word "comprise" and variations such as "comprises" or "comprising" will be understood to imply the inclusion of stated elements but not the exclusion of any other elements.

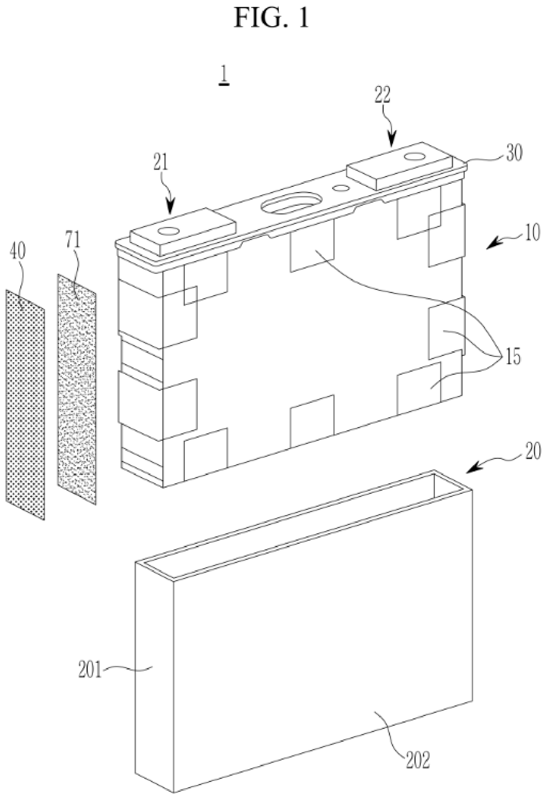

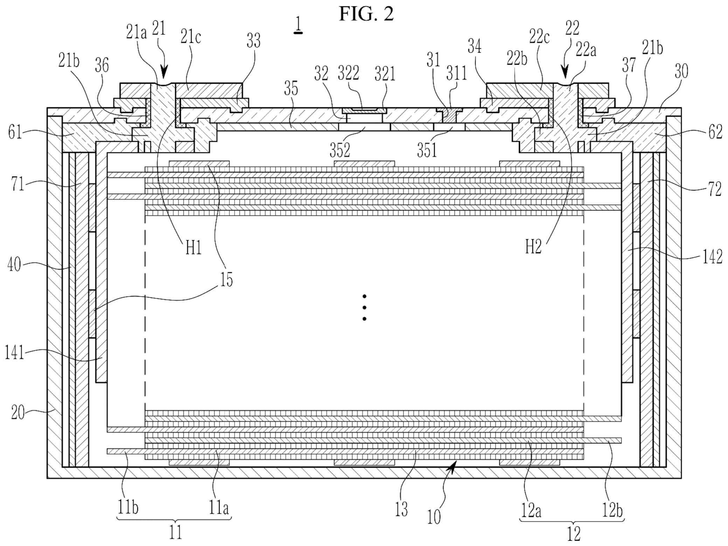

FIG. 1 illustrates an exploded perspective view of a rechargeable battery according to an embodiment of the present disclosure, and FIG. 2 illustrates a longitudinal cross-sectional view of FIG. 1, in an assembled state.

Referring to FIG. 1 and FIG. 2, a rechargeable battery 1 according to an embodiment of the present disclosure includes an electrode assembly 10 that is charged and discharged, a case 20 that accommodates the electrode assembly 10, a cap plate 30 that seals (e.g., covers or covering) an opening of the case 20, and a gas-capturing thin film layer 40. The rechargeable battery includes a first electrode terminal 21 and a second electrode terminal 22 electrically connected to the electrode assembly 10 and installed on the cap plate 30.

For example, the electrode assembly 10 may be formed by disposing a first electrode 11 and a second electrode 12 on both (e.g., opposite) sides of a separator 13, which is an insulator, and winding the first electrode 11, the separator 13, and the second electrode 12 in a jelly roll state. For example, the first electrode 11 may be a negative electrode, and the second electrode 12 may be a positive electrode. In another example, the electrode assembly may be formed in a stack type in which the first electrode, the separator, and the second electrode are stacked.

The first and second electrodes 11 and 12 may respectively include coated regions 11a and 12a in which an active material is applied to a current collector made of a metal thin plate, and uncoated regions 11b and 12b in which an active material is not applied to be formed as an exposed current collector. The uncoated region 11b of the first electrode 11 may be formed at one end portion of the first electrode 11 to be wound. The uncoated region 12b of the second electrode 12 may be formed at one end portion of the second electrode 12 to be wound. That is, the uncoated regions 11b and 12b of the first and second electrodes 11 and 12 may be disposed at opposite ends (e.g., both ends) of the electrode assembly 10, respectively.

For example, the case 20 may be formed as a substantially rectangular parallelepiped space to set a space for accommodating the electrode assembly 10 and an electrolyte therein, and an opening connecting the outside and the inner space may be formed in a rectangular shape on one side of the rectangular parallelepiped. The opening allows the electrode assembly 10 to be inserted into the case 20. For example, the case 20 and the cap plate 30 may be made of aluminum and welded to each other.

The cap plate 30 may include an electrolyte injection port 31, a vent hole 32, and terminal holes H1 and H2. The electrolyte injection port 31 allows an electrolyte to be injected into the case 20 after the cap plate 30 is coupled to the case 20. After the electrolyte is injected, the electrolyte injection port 31 may be sealed with a sealing plug 311.

The vent hole 32 may be sealed with a vent plate 321 to prevent an explosion of the rechargeable battery 1 by discharging an internal pressure that increases above a set pressure due to an event occurring in the rechargeable battery 1. When the internal pressure of the rechargeable battery 1 reaches the set pressure, the vent plate 321 is cut along a notch 322 to open the vent hole 32, and thus the internal pressure exceeding the set pressure is discharged.

The first and second electrode terminals 21 and 22 may be respectively installed in the terminal holes H1 and H2 of the cap plate 30, and may be electrically connected to the first and second electrodes 11 and 12 of the electrode assembly 10 to be drawn out of the case 20. For example, the first and second electrode terminals 21 and 22 may include rivet terminals 21a and 22a, flanges 21b and 22b, and plate terminals 21c and 22c.

The rivet terminals 21a and 22a may be installed in the terminal holes H1 and H2 of the cap plate 30, the flanges 21b and 22b may be formed integrally and widely with the rivet terminals 21a and 22a on the inner side of the cap plate 30, and the plate terminals 21c and 22c may be disposed on the outer side of the cap plate 30 and connected to the rivet terminals 21a and 22a by riveting or welding.

The cap plate assembly including the cap plate 30 may further include first and second gaskets 36 and 37. The first and second gaskets 36 and 37 may be installed between the rivet terminals 21a and 22a of the first and second electrode terminals 21 and 22, respectively, and the inner surfaces of the terminal holes H1 and H2, respectively, to seal and electrically insulate between the rivet terminals 21a and 22a of the first and second electrode terminals 21 and 22 and the cap plate 30, respectively.

The cap plate assembly may further include an insulating member 33. In the first electrode terminal 21 connected to the first electrode 11, the plate terminal 21c may be electrically connected to the rivet terminal 21a, and the insulating member 33 may be disposed between the outer side of the cap plate 30 and the plate terminal 21c. The insulating member 33 may electrically insulate the plate terminal 21c from the cap plate 30.

The first gasket 36 may further extend between the flange 21b of the first electrode terminal 21 and the inner surface of the cap plate 30 to further seal and electrically insulate between the flange 21b and the cap plate 30. That is, by installing the rivet terminal 21a of the first electrode terminal 21 in the terminal hole H1 of the cap plate 30 and the hole of the insulating member 33, the first gasket 36 prevents electrolyte from leaking through the terminal hole H1 and the hole of the insulating member 33.

The cap plate assembly may further include a conductive top plate 34. In the second electrode terminal 22 connected to the second electrode 12, the plate terminal 22c may be electrically connected to the rivet terminal 22a, and the conductive top plate 34 may be disposed between the outer side of the cap plate 30 and the plate terminal 22c. The top plate 34 may electrically connect the plate terminal 22c to the cap plate 30. Accordingly, the cap plate 30 and the case 20 may be charged (e.g., electrically connected) to the second electrode 12, i.e., the positive electrode.

The second gasket 37 may further extend between the flange 22b of the second electrode terminal 22 and the inner surface of the cap plate 30 to further seal and electrically insulate between the flange 22b and the cap plate 30. That is, by installing the rivet terminal 22a of the second electrode terminal 22 in the terminal hole H2 of the cap plate 30 and the hole of the top plate 34, the second gasket 37 prevents electrolyte from leaking through the terminal hole H2 and the hole of the top plate 34.

The electrode assembly 10 may further include first and second lead tabs 141 and 142. The first and second lead tabs 141 and 142 may electrically connect the first and second electrode terminals 21 and 22 to the first and second electrodes 11 and 12, respectively. The first and second lead tabs 141 and 142 may be connected to the uncoated regions 11b and 12b of the first and second electrodes 11 and 12, respectively, by laser welding.

By caulking the lower ends of the rivet terminals 21a and 22a by coupling the first and second lead tabs 141 and 142 to the lower ends of the rivet terminals 21a and 22a, the first and second lead tabs 141 and 142 may be connected to the lower ends of the rivet terminals 21a and 22a while being supported by the flanges 21b and 22b.

The electrode assembly 10 may further include a finishing tape 15. The finishing tape 15 may be attached to the side surfaces of the first and second lead tabs 141 and 142 and the electrode assembly 10. Referring to FIG. 1 and FIG. 2, the finishing tapes 15 may be provided on the upper, lower, left, and right sides of the electrode assembly 10, with three attached to the upper and lower sides and two attached to the left and right sides. As the electrode assembly 10 is formed in a jelly roll type or a stack type, the finishing tape 15 may be used more or less in an appropriate position than that illustrated in FIG. 1.

The rechargeable battery 1 may further include first and second electrode insulating members 61 and 62. The first and second electrode insulating members 61 and 62 may be installed between the first and second lead tabs 141 and 142 and the cap plate 30 to electrically insulate the first and second lead tabs 141 and 142 from the cap plate 30.

The first and second electrode insulating members 61 and 62 may be coupled to the cap plate 30 on one side and surround the first and second lead tabs 141 and 142, the rivet terminals 21a and 22a, and the flanges 21b and 22b on the other side, thereby firmly stabilizing the connection structure between the first and second lead tabs 141 and 142 and the first and second electrode terminals 21 and 22.

The cap plate assembly may further include an insulating case 35. The insulating case 35 may be provided on the inner surface of the cap plate 30 facing the electrode assembly 10. That is, the insulating case 35 may be disposed between the first and second electrode insulating members 61 and 62 on the upper side of the electrode assembly 10 to form electrical insulation between the electrode assembly 10 and the cap plate 30 and prevent movement of the first and second electrode insulating members 61 and 62 left and right (in FIG. 2).

The rechargeable battery 1 may further include first and second side retainers 71 and 72. The first and second side retainers 71 and 72 may be interposed between the first and second lead tabs 141 and 142 and the inner wall of the case 20 to fix the position of the electrode assembly 10 in the case 20, thereby preventing the left-right movement (in FIG. 2) of the electrode assembly 10 within the case 20.

In some embodiments, the retainers 71 and 72 may implement side insulation of the electrode assembly 10 on the left and right sides (FIG. 2) of the electrode assembly 10. That is, the retainers 71 and 72 may further electrically insulate the electrode assembly 10 together with an internal insulating tape.

In an embodiment, the gas-capturing thin film layer 40 may be provided on the outer surfaces of the first and second side retainers 71 and 72, e.g., the gas-capturing thin film layer 40 may be between the inner wall of the case 20 and each of the first and second side retainers 71 and 72. The gas-capturing thin film layer 40 may be formed of a gas adsorbent nanocomposite.

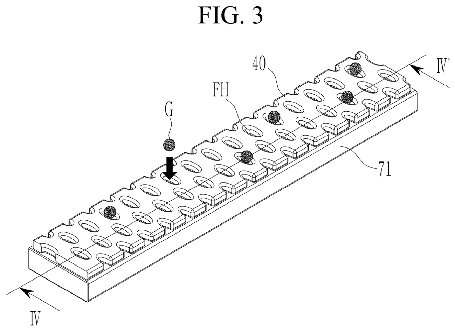

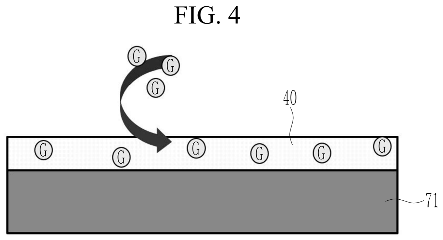

FIG. 3 illustrates a perspective view of the first side retainer 71 of FIG. 2 and the gas-capturing thin film layer 40 formed thereon, and FIG. 4 illustrates a cross-sectional view taken along line IV-IV' of FIG. 3.

Referring to FIG. 3 and FIG. 4, the gas-capturing thin film layer 40 may be provided with fine holes FH for adsorbing fine gases generated in the electrode assembly 10 during manufacturing and while being left unattended.

In detail, fine gases G generated inside the case 20 of the rechargeable battery 1 may be adsorbed to the fine holes FH of the gas-capturing thin film layer 40 provided in the first and second side retainers 71 and 72. In this way, since the fine gases G generated inside the rechargeable battery 1 are adsorbed, the concentration of the fine gases G may be controlled in the case 20. That is, because the concentration of the fine gases G generated inside the case 20 is reduced, the margin of the inner space of the case 20 may be alleviated, and the physical contact between the electrode assembly 10 and the fine gases G inside may be prevented.

For example, the gas-capturing thin film layer 40 may be formed by coating a gas adsorbent nanocomposite (e.g., the gas-capturing thin film layer 40 may be a coating coated as a material layer) or may be film-formed as a gas adsorbent nanocomposite (e.g., the gas-capturing thin film layer 40 may be applied as liquid and cured into a thin film having a smaller thickness than a coating). In FIG. 3 and FIG. 4, the gas-capturing thin film layer 40 is formed by attaching a film of a gas adsorbent nanocomposite to the outer surfaces of the first and second side retainers 71 and 72 (e.g., the outer surfaces of the first and second side retainers 71 and 72 may be surfaces facing the respective inner surfaces of the side walls of the case 20). Compared to formation by coating, formation of the film type facilitates installation of the gas-capturing thin film layer 40 on the first and second side retainers 71 and 72.

The gas-capturing thin film layer may also be formed on the inner surfaces of the first and second side retainers facing the electrode assembly. In some embodiments, the gas-capturing thin film layer may be formed together on the outer and inner surfaces of the first and second side retainers, and in this case, the amount of fine gas-captured may be increased.

Hereinafter, various embodiments of the present disclosure will be described. Descriptions of same configurations that have been previously described with references to FIGS. 1-4 will be omitted, and mainly descriptions of different configurations will be described.

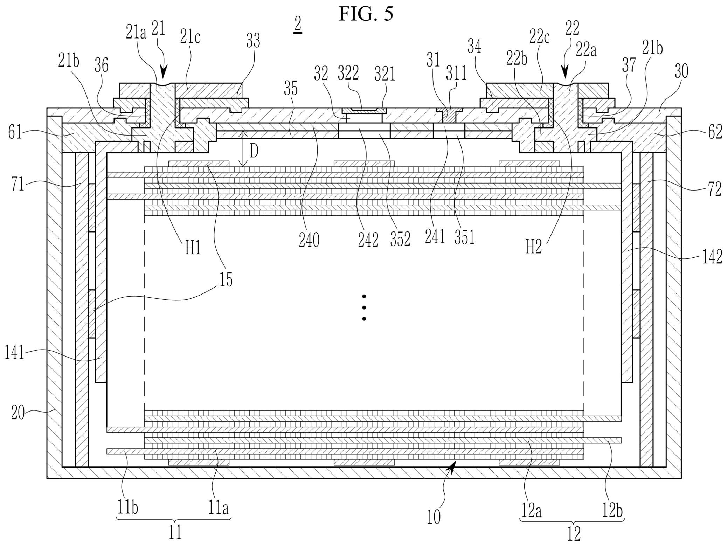

FIG. 5 illustrates a longitudinal cross-sectional view of a rechargeable battery according to another embodiment of the present disclosure. Referring to FIG. 5, in a rechargeable battery 2, a gas-capturing thin film layer 240 may be provided on the outer surface of the insulating case 35. The gas-capturing thin film layer 240 may maintain a set distance D from the electrode assembly 10.

The insulating case 35 may be provided with corresponding holes 351 and 352 formed corresponding to (e.g., overlapping) the electrolyte injection port 31 and the vent hole 32, respectively, to enable movement of fine gases and injection of electrolyte. In some embodiments, the gas-capturing thin film layer 240 formed on the outer surface of the insulating case 35 may be provided with corresponding holes 241 and 242 formed corresponding to (e.g., overlapping) the holes 351 and 352 in the insulating case 35, respectively, to enable the adsorption of fine gases generated inside the case 20.

Accordingly, the concentration of the fine gases may be controlled within the case 20. That is, by reducing the concentration of fine gases generated inside the case 20, the margin of the space inside the case 20 may be alleviated, and physical contact between the electrode assembly 10 and the inner gas may be prevented.

The gas-capturing thin film layer may also be formed on the inner surface of the insulating case facing the electrode assembly. In some embodiments, the gas-capturing thin film layer may be formed together on both the outer and inner surfaces of the insulating case, in which case the amount of fine gas captured may be increased.

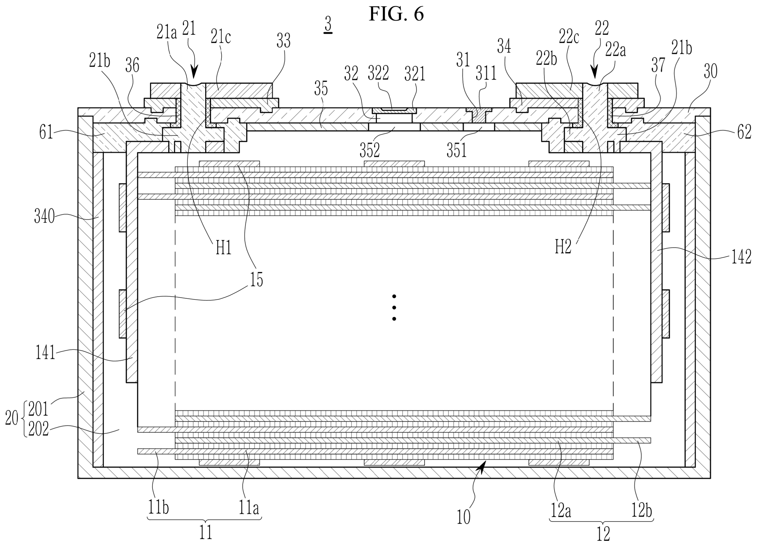

FIG. 6 illustrates a longitudinal cross-sectional view of a rechargeable battery according to yet another embodiment of the present disclosure. Referring to FIG. 1 and FIG. 6, the case 20 may include a small width side surface 201 corresponding to (e.g., overlapping) a narrow width surface of the electrode assembly 10 and a large width side surface 202 corresponding to a wide width surface of the electrode assembly 10 (e.g., in FIG. 6, the large width side surface 202 is behind the electrode assembly 10 looking into the page). Referring to FIG. 6, in a rechargeable battery 3, a gas-capturing thin film layer 340 may be provided on the inner surface of the small width side surface 201 of the inner surface of the case 20.

The fine gases generated inside the case 20 of the rechargeable battery 3 may come out to the narrow width surface of the electrode assembly 10 and may be adsorbed to the fine holes of the gas-capturing thin film layer 340 provided on the inner surface of the small width side surface 201 facing the narrow width surface.

In this way, since the fine gases generated inside the rechargeable battery 3 are adsorbed, the concentration of the fine gases may be controlled in the case 20. That is, by reducing the concentration of fine gases generated inside the case 20, the margin of the space inside the case 20 may be alleviated, and physical contact between the electrode assembly 10 and the inner gas may be prevented.

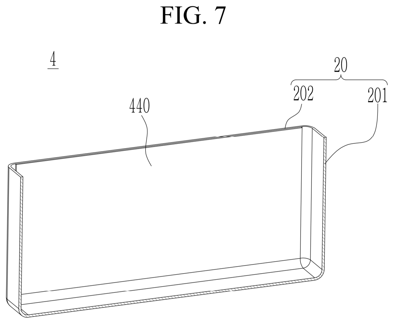

FIG. 7 illustrates a cross-sectional perspective view of a case applied to a rechargeable battery according to still another embodiment of the present disclosure. Referring to FIG. 1, FIG. 2, FIG. 6, and FIG. 7, in a rechargeable battery 4, a gas-capturing thin film layer 440 may be provided on the inner surface of the large width side surface 202 of the inner surface of the case 20.

The fine gases generated inside the case 20 of the rechargeable battery 4 may come out to the narrow width surface of the electrode assembly 10, pass through the small width side surface 201 facing it, and are adsorbed into the fine holes of the gas-capturing thin film layer 440 provided on the inner surface of the large width side surface 202. Because the gas-capturing thin film layer 440 is formed on the large width side surface 202, the amount of fine gas adsorption may be increased compared to the configuration formed on the small width side surface 201.

In this way, because a large amount of fine gases generated inside the rechargeable battery 4 is largely adsorbed into the large width side surface 202, the concentration of the fine gases may be controlled in the case 20. That is, by further reducing the concentration of fine gases generated inside the case 20, the margin of the space inside the case 20 may be further alleviated, and physical contact between the electrode assembly 10 and the fine gases may be prevented.

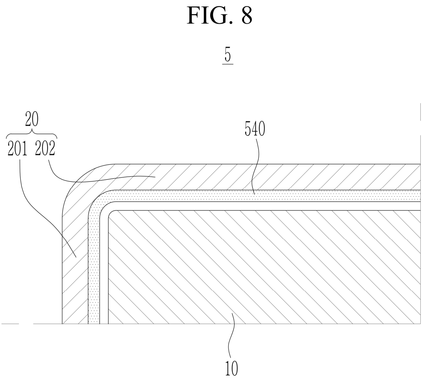

FIG. 8 illustrates a traverse cross-sectional view of a rechargeable battery according to yet another embodiment of the present disclosure. Referring to FIG. 1 and FIG. 8, in a rechargeable battery 5, a gas-capturing thin film layer 540 may be provided on the inner surface of the side surface of the case 20. That is, the gas-capturing thin film layer 540 may be continuously provided on the small width side surface 201 and the large width side surface 202 of the case 20 (e.g., the gas-capturing thin film layer 540 may be continuous on both the small and large width side surfaces 201 and 202 of the case 20). The gas-capturing thin film layer 540 may be formed in a coating type and provided on the inner surface of the case 20.

The gas-capturing thin film layer 540 may include the result of combining the gas-capturing thin film layers 340 and 440 described previously with reference to FIGS. 6 and 7. Because the gas-capturing thin film layer 540 adsorbs a large amount of the fine gases generated inside the rechargeable battery 5 in the small and large width side surfaces 201 and 202, the concentration of the fine gases inside the case 20 may be greatly controlled. Because the gas-capturing thin film layer 540 is formed continuously, the non-adsorbed area of fine gases may be minimized.

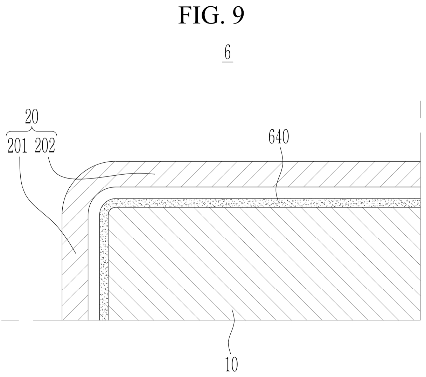

FIG. 9 illustrates a traverse cross-sectional view of a rechargeable battery 6 according to still another embodiment. Referring to FIG. 9, a gas-capturing thin film layer 640 may be provided on the outer surface of the electrode assembly 10. That is, the gas-capturing thin film layer 640 may be continuously formed on the narrow and wide surfaces of the electrode assembly 10, and may continuously face the small width side surface 201 and the large width side surface 202 of the case 20. The gas-capturing thin film layer 640 may be formed in a film type and attached to the outer surface of the electrode assembly 10.

The gas-capturing thin film layer 640 of the sixth embodiment may obtain the result of the gas-capturing thin film layer 540 described previously with reference to FIG. 8. Because the gas-capturing thin film layer 640 adsorbs a large amount of the fine gases generated inside the rechargeable battery 6 by facing the small and large width side surfaces 201 and 202, the concentration of the fine gases may be greatly controlled in the case 20. Because the gas-capturing thin film layer 640 is formed continuously, the non-adsorbed area of fine gases may be minimized.

By way of summation and review, during formation of a rechargeable battery or when leaving a rechargeable battery unattended, there may be a limit to controlling the concentration of fine gases generated inside the case. However, due to the fine gases inside the case, the cell lifespan of the rechargeable battery may be reduced, and the fine gases may physically come into contact with the electrode assembly. Therefore, considering the amount of gas generated inside the cell of the rechargeable battery, a margin design for the inner space of the case may be desired.

In view of the above, the present disclosure is directed toward a rechargeable battery that may control fine gases generated inside a case. That is, according to embodiments of the present disclosure, a gas-capturing thin film layer is provided on at least one of an electrode assembly, a case, a cap plate, and a side retainer to adsorb fine gases generated inside the case, thereby controlling the concentration of the fine gases inside the case. By reducing the concentration of fine gases generated inside the case, the margin of the space inside the case may be alleviated, and physical contact between the electrode assembly and the inner gas may be prevented.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present disclosure as set forth in the following claims.

## Claims

1. A rechargeable battery (1, 2, 3, 4, 5, 6), comprising:
an electrode assembly (10) that includes a first electrode (11) and a second electrode (12) stacked on opposite sides of a separator (13), and a first lead tab (141) and a second lead tab (142) respectively connected to uncoated regions (11b, 12b) of the first electrode (11) and the second electrode (12);
a case (20) accommodating the electrode assembly (10);
a first side retainer (71) and a second side retainer (72) between the first lead tab (141) and an inner wall of the case (20) and between the second lead tab (142) and the inner wall of the case (20), respectively;
a cap plate (30) covering an opening of the case (20) and including electrode terminals (21, 22), the electrode terminals (21, 22) being electrically connected to the first lead tab (141) and the second lead tab (142) of the electrode assembly (10); and
a gas-capturing thin film layer (40, 240, 340, 440, 540, 640) on at least one of the electrode assembly (10), the case (20), the cap plate (30), the first side retainer (71), and the second side retainer (72).

2. The rechargeable battery (1) as claimed in claim 1, wherein the gas-capturing thin film layer (40) is on outer surfaces of the first side retainer (71) and the second side retainer (72).

3. The rechargeable battery (1) as claimed in claim 1 or 2, wherein the gas-capturing thin film layer (40) is on inner surfaces of the first side retainer (71) and the second side retainer (72).

4. The rechargeable battery (1) as claimed in any of the previous claims, wherein the electrode assembly (10) further includes a finishing tape (15) attached to outer surfaces of the first lead tab (141) and the second lead tab (142) and a side surface of the electrode assembly (10).

5. The rechargeable battery (1) as claimed in any of the previous claims, wherein the gas-capturing thin film layer (40) includes a gas adsorbent nanocomposite, optionally wherein the gas-capturing thin film layer (40) includes fine holes (FH) that adsorb fine gases generated within the electrode assembly (10).

6. The rechargeable battery (1, 2, 3) as claimed in any of the previous claims, wherein the cap plate (30) further includes an insulating case (35) on an inner surface facing the electrode assembly (10).

7. The rechargeable battery (2, 3) as claimed in claim 7, wherein the gas-capturing thin film layer (240, 340) is on an outer surface of the insulating case (35) and/or wherein the gas-capturing thin film layer (340) is on an interior surface of the insulating case (20).

8. The rechargeable battery (2) as claimed in any of the previous claims, wherein the gas-capturing thin film layer (240) maintains a set distance (D) from the electrode assembly (10).

9. The rechargeable battery (3, 4) as claimed in any of the previous claims , wherein the case (20) includes a small width side surface (201) corresponding to a narrow width surface of the electrode assembly (10) and a large width side surface (202) corresponding to a wide width surface of the electrode assembly (10), the gas-capturing thin film layer (340, 440) being on an inner surface of the small width side surface (201) and/or on an inner surface of the large width side surface (202).

10. The rechargeable battery (5) as claimed in any of the previous claims, wherein the gas-capturing thin film layer (540) is on an inner surface of a side surface of the case (20).

11. The rechargeable battery (5) as claimed in claim 10, wherein the case (20) includes a small width side surface (201) corresponding to a narrow width surface of the electrode assembly (10) and a large width side surface (202) corresponding to awide width surface of the electrode assembly (10), the gas-capturing thin film layer (540) being on the small width side surface (201) and the large width side surface (202).

12. The rechargeable battery (5) as claimed in claim 11 wherein the gas-capturing thin film layer (540) is continuous on the small width side surface (201) and the large width side surface (202).

13. The rechargeable battery (6) as claimed in any of the previous claims , wherein the gas-capturing thin film layer (640) is on an outer surface of the electrode assembly (10).

14. The rechargeable battery (6) as claimed in any of the previous claims, wherein the electrode assembly (10) includes a narrow width surface and a wide width surface, the gas-capturing thin film layer (640) being on the narrow width surface and the wide width surface optionally wherein the gas-capturing thin film layer (640) is continuous on the narrow width surface and the wide width surface.

15. The rechargeable battery (1, 2, 3, 4, 5, 6) as claimed in any of the previous claims , wherein the gas-capturing thin film layer (40, 240, 340, 440, 540, 640) is a coating or a film of a gas adsorbent nanocomposite.
